# EUROPEAN PATENT APPLICATION

(11) **EP 1 291 169 A2**
(43) Date of publication of application: **12.03.2003**
(21) Application number: 02253530.6
(22) Date of filing: 20.05.2002
(51) Int. Cl.: B32B 31/20

(54) **Laminator**

(30) Priority: 29.08.2001 KR 2001026289; 30.08.2001 KR 2001026370
(71) Applicant: Shinil Industrial Co. Ltd., Ansan-shi, Kyungki-do (KR)
(72) Inventor: Choi, Jong Wom, 102-706 Illshin-Apartment, Suwon-shi, Kyungki-do (KR)
(74) Representative: Giles, Ashley Simon

(57) **Abstract**

The present invention relates to a laminator that a material to be coated and a coating film are supplied from the front side to the rear side of a body so that an user can easily ascertain a coated state of the material and that the coated material can be outputted from an outlet of the body as a flat state by preventing the coated material to be abruptly fell toward the ground. The present invention relates to a laminator that provided a preheating stage prior to a heating stage for coating a film to a material so as not to be occurred an air bubble when the material attached with the film is pressed and cooled thereby to be increased a coating quality.

## Description

### BACKGROUND OF THE INVENTION

### Field of the Invention

The present invention relates to a laminator that a material to be coated and a coating film are supplied from the front side to the rear side of a body so that an user can easily ascertain a coated state of the material and that the coated material can be outputted from an outlet of the body as a flat state by preventing the coated material to be abruptly fell toward the ground.

The present invention relates to a laminator that provided a preheating stage prior to a heating stage for coating a film to a material so as not to be occurred an air bubble when the material attached with the film is pressed and cooled thereby to be increased a coating quality.

### Description of the Prior Art

In general, a laminator serves to coat a transparent resin such as a polyethylene to the surface of a materials to be coated such as a document and a photo and so on so that an external physical and chemical pressures are prevented so that the documents can be maintained the original state for a long time period .

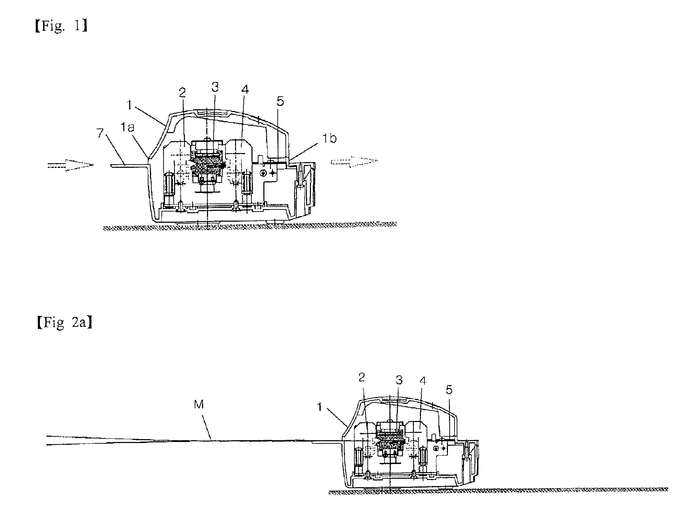

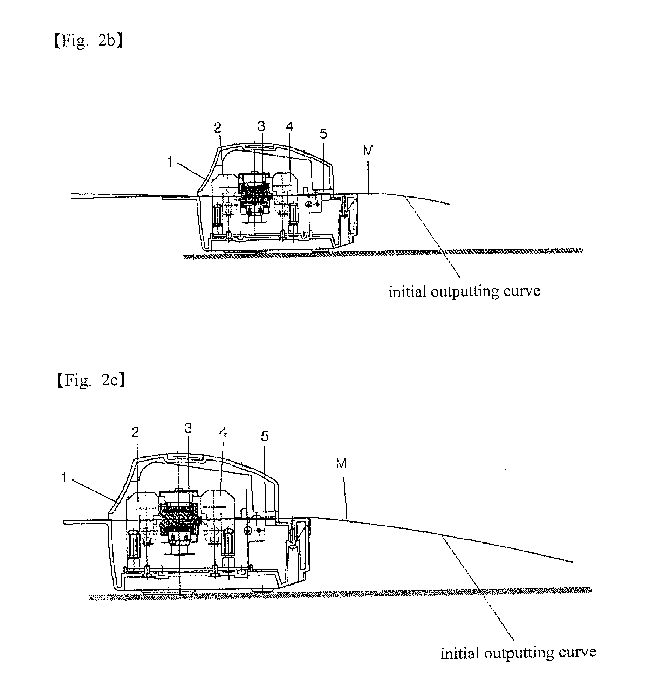

A conventional laminator for coating an insulating film to the material is, as shown in Fig. 1 to Fig. 2c, operated as the followings.

First, the material M is located at the guide plate 7 in front of a body 1 after a coating film is disposed at the upper and lower portion of the material M to be coated.

The material M is supplied to the inside of the laminator by a guide roller 2 and attached with the coating film at the upper and lower portion of the material M by supplying the heat from a heating member 3 to the material M and the coating film.

The material M attached with the film passes between a pressing roller 4 to ensure the attached state of the film to the material M and passes the cooling plate 5 to ensure the flatted state of the material M attached with the film. The material M completed the coating is extruded to the outside of the body 1 through an outlet 1b by an extruding roller.

Meanwhile, the body 1 includes various functional button not shown such as a power electric source button, a coating start button, a paper lump lamp and so on.

Furthermore, the body 1 disposes in front of it with a guide plate for continuously guiding the material corresponding to the supplying inlet 1a for supplying the material and disposes in rear of it with a tray for accumulating the coated material near the outlet 1b.

However, the laminator as the foregoing descriptions employs the method that the material M and the coating film are supplied from the front side to the rear side of the body 1(from the left to the right in drawings).

Therefore, in view of that the user works in front of the body 1 the user can not easily ascertain the falling state of the coated material M to the rear side of the body 1.

Furthermore, the conventional laminator is formed by the horizontal state from the supplying inlet 1a to the outlet 1b so as to have a distance between the outlet 1b and the ground.

Therefore, the coated material M is abruptly felled to the ground from the outlet 1b thereby causing the coated material M to be distorted. The distorted material M is cooled at the atmosphere to maintain the distorted state thereby causing the belief of the user to be deteriorated.

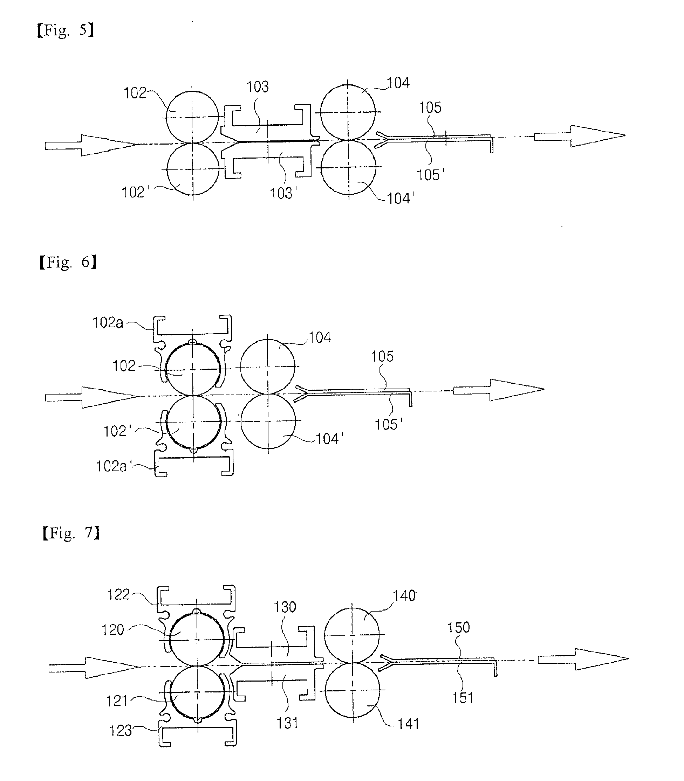

The conventional laminator as shown in Fig. 5 includes guiding rollers 102 and 102' for guiding the material and the film toward the inside of a body, heating plates 103 and 103' for heating the film to be attached to the material, pressing rollers 104 and 104' for pressing the film to the material to ensure the film attached state of the material and cooling plates 105 and 105' for cooling the material attached with the film.

As shown in Fig. 6 another conventional laminator includes guiding rollers 102 and 102', pressing rollers 104 and 104' and cooling plates 105 and 105' in order. The Fig. 6 is similar to the Fig. 5. That is, instead the heating plate is not disposed between the guiding rollers 102 and 102' and the pressing rollers 104 and 104', the roller heating plates 102a,and 102a' are disposed at the peripheral surface of the guiding rollers 102 and 102' for heating the surface of the guiding rollers 102 and 102'.

However, the conventional laminators as the foregoing descriptions with reference to the drawings Figs. 5 and 6 result in an air bubble at the coated material. That is, when the material attached with the film passes the heating rollers, the pressing rollers and the cooling plates in order, the air bubble is occurred.

That is, because the material and the coating film supplied from the guide rollers 102 and 102' are suddenly heated by the heating plates 103 and 103' the film is not well attached to the material at the state of not being adopted the high temperature of the heating plates 103 and 103' the material attached with the film is occurred the air bubble when being pressed and cooled.

### SUMMARY OF THE INVENTION

Therefore, the present invention is invented to resolve the above problems of the conventional laminator and it is a first object of the present invention to provide a laminator that a material and a coating film are supplied from the front side to the rear side of the body so that an user can easily ascertain a coating process.

A second object of the present invention is to provide a laminator that a coated material can be outputted from an outlet as a flat state by preventing an abrupt falling of the coated material to the ground.

A third object of the present invention is to provide a laminator that provided a preheating stage before a heating stage for preheating the guide roller so as not to produce an air bubble when the material attached with the film is pressed and cooled thereby increasing the coating quality.

In order to achieve the above first and second objects the present invention provides a laminator comprising : a body formed at its rear side with a supplying inlet and formed at its front side with an outlet, guiding roller disposed at the neighborhood of the inlet for guiding a material and a film to the inside of the body, heating member disposed at the neighborhood of the guiding roller for heating the material and the film, pressing roller disposed at the neighborhood of the heating member for pressing the material to be attached with the film thereto, cooling plate disposed at the neighborhood of the pressing roller for cooling the material attached with the film, wherein the above components are disposed at the lower plate disposed at the lower portion of the body, wherein the lower plate is disposed from the rear to the front of the body by a predetermined degrees.

In order to achieve the above third object the present invention provides a laminator comprising : a body formed at its front side with a supplying inlet and formed at its rear side with an outlet, guiding rollers disposed at the neighborhood of the inlet for guiding a material and a film to the inside of the body, heating members disposed at the neighborhood of the guiding rollers for heating the material and the film, pressuring rollers disposed at the neighborhood of the heating members for pressing the material attached with the film thereto, cooling plates disposed at the neighborhood of the pressing rollers for cooling the material attached with the film, wherein the guiding rollers are at their outer peripheral surface disposed with roller case heating plates for pre-heating the material and the film by a predetermined temperature.

The roller case heating plates serve to pre-heat the material and the film when the material and the film are supplied from the inlet by the guiding rollers.

### BRIEF DESCRIPTION OF THE DRAWINGS

Fig. 1 is a perspective view of the conventional laminator.
Figs. 2a to 2c are views for showing the coating operation using the conventional laminator.
Fig. 3 is a perspective view of the present invention.
Figs. 4a to 4c views showing the coating operation using the laminator of the present invention.
Fig. 5 is a schematic view of the inside of the conventional laminator.
Fig. 6 is a schematic view of the inside of the other conventional laminator.
Fig. 7 is a view of the internal structure of another conventional laminator.

### DETAILED DESCRIPTION OF THE PREFERRED EMBODIMENTS

The detailed description of the present invention will now be described with reference to the drawings.

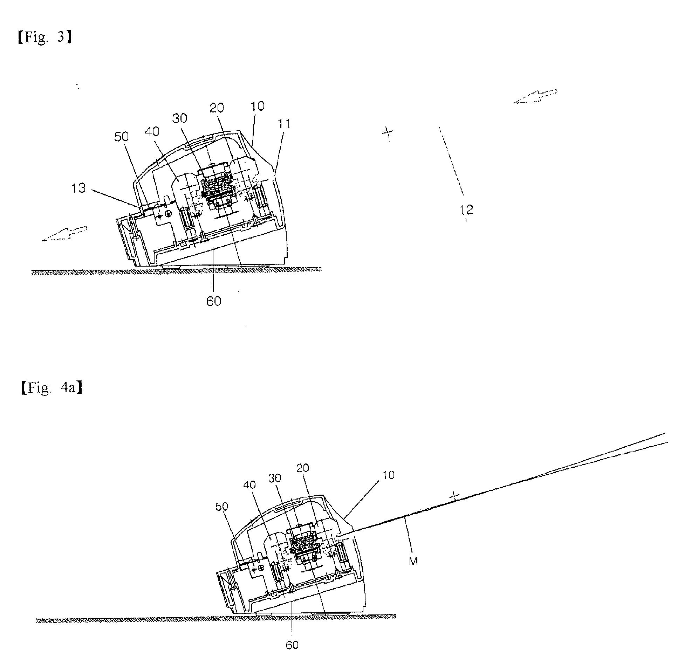

Fig. 3 is a perspective view of the present invention.

As shown in Fig. 3 the laminator of the present invention includes a body 10 formed at its rear side(right in drawing) with a supplying inlet 11 for supplying a material to be coated and a film and formed at its front side(left in drawing) an outlet 13 for extruding the coated material, a guiding roller 20 disposed at the one side of the supplying inlet 11 for guiding the material and the film to the inside of the body 10.

The laminator of the present invention further includes a heating member 30 disposed at the one side of the guiding roller 20 for heating the material and the film, a pressing roller 40 disposed at the one side of the heating member 30 for pressing the material attached with the film to ensure the film attached state to the material and a cooling plate 50 disposed at the one side of the pressing roller 40 for cooling the material pressed with the film.

The body 10 includes various functional button not shown such as a power electric source button, a coating start button, a paper lump lamp and so on. Furthermore, the body 10 disposes at rear side of it with a guide plate 12 for continuously guiding the material and the film corresponding to the supplying inlet 11 for supplying the material and the film and disposes in front of it with the tray for accumulating the coated material outputted from the outlet 13.

Meanwhile, the components as the above, that is, the guiding roller 20, the heating member 30 and the pressing roller 40 are disposed at the upper surface of a lower plate 60 disposed at the lower portion of the body 10. The lower plate 60 is disposed from the rear to the front of the body 10 by about 15 degrees so that the other components are also disposed from the rear to the front of the body 10 by a predetermined degrees.

The operation of the laminator having the above constructions will now be described with reference to Figs. 4a to 4c.

As shown in Fig. 4a the material disposed at its upper and lower portions with the coating film is disposed at the guiding plate 12 by the user and the material is supplied to the inside of the body 10 by the guiding roller 20.

The material supplied to the inside of the body 10 is heated by the heating member 30 so as to be attached the films to the upper and lower portions of the material. The material attached with the film passes the pressing heater 40 to ensure the film to be surly attached to the material and to ensure the pressed material to be surly flatted.

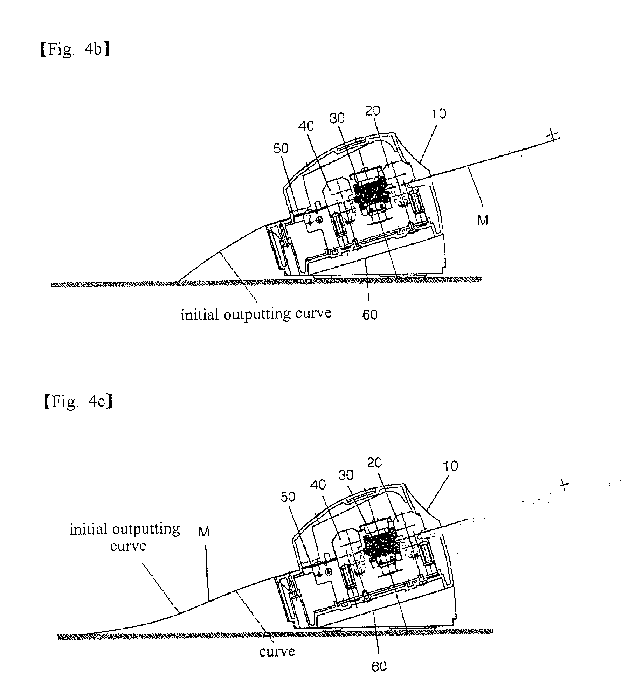

As shown in Fig. 4b the coated material is extruded through the outlet 13 in front of the body 10 by the extruding roller. That is, the coated material is extruded from the rear side to the front side of the body 10 so that the user can easily ascertain the coating state of the material at a real time.

As shown in Fig. 4c the coated material is smoothly extruded through the outlet 13 because the body 10 is in lower direction formed by the predetermined degrees from the rear to the front thereof so that the coated material can be prevented from the distortions by the abrupt falling as shown in the conventional laminator.

As the foregoing descriptions the present invention has advantages that because the components are in lower direction disposed from the upper portion to the lower portion by the predetermined degrees, the user can ascertain the extruding state of the coated material at the real time and the coated material can be prevented its distortion by the abrupt falling.

Fig. 7 is a view of the internal structure of the laminator of present invention.

As shown in Fig. 7 the laminator of the present invention includes the body formed at its front side(left in drawing) with a supplying inlet not shown for supplying a material and a film and formed at its rear side(right in drawing) with an outlet not shown for extruding the coated material, guiding rollers 120 and 121 disposed at the one side of the supplying inlet of the body for guiding the material and the film to the inside of the body, heating plates 130 and 131 disposed at the one side of the guiding rollers 120 and 121 for heating the film to be attached to the material, pressing rollers 140 and 141 disposed at the one side of the heating plates 130 and 131 for pressing the material so as to be pressed the film to the material and cooling plates 150 and 151 disposed at the one side of the pressing rollers 140 and 141 for cooling the material pressed the film.

That is, the body is at its upper side formed with the supplying inlet and the extruding outlet for supplying and extruding the material and is at its upper portion coupled with the cover member.

The neighborhood of the supplying inlet is disposed a pair of the guiding rollers 120 and 121 to be faced each other and of the extruding outlet is disposed a pair of the pressing rollers 140 and 141 to be faced each other.

Furthermore, between the guiding rollers 120 and 121 and the pressing rollers 140 and 141 the heating plates 130 and 131 are in parallel disposed for heating the material and the film.

At this time, at each side of the guide rollers 120 and 121 and the pressing rollers 140 and 141 driving units not shown are coupled. Between the driving units and the each rollers the gears are disposed so that the rotation direction can be changed.

As shown in Fig. 7 the heating plates 130 and 131 of the present invention are disposed to face each other for heating the material and the film by a predetermined temperature when being passed therebetween.

The pressing rollers 140 and 141 of the present invention are disposed to face each other for pressing the material and the film supplied from the heating plates 130 and 131 by a predetermined pressure when being passed therebetween.

The cooling plates 150 and 151 of the present invention are disposed to face each other for cooling the material pressed with the film by a predetermined temperature so as for the coated material to be flatted when being passed therebetween.

Meanwhile, as shown in Fig. 7 the laminator of the present invention includes roller case heating plates 122 and 123 at the outer peripheral surface of the guiding rollers 120 and 121 for pre-heating the guiding rollers 120 and 121 by a predetermined temperature.

The operation of the laminator having the above constructions will now be in detail described.

The power electric source is inputted to the laminator of the present invention so that the guiding rollers 120 and 121 and the pressuring rollers 140 and 141 are operated.

Under this state, the material enclosed at the upper and the lower side thereof with the coating film is supplied to the inside of the body through the inlet and the guiding rollers 120 and 121 are rotated in the arrow direction so that the material can be supplied to the inside of the body together with the film.

The material and the film are passed between the heating plates 130 and 131 thereby to be changed its property as the heating state and are passed between the pressing rollers 140 and 141 thereby to be attached the film to the material by being pressed by an appropriate pressure.

At this time, when the material enclosed at the upper and lower side thereof is supplied into the inside of the body by the guiding rollers 120 and 121 the roller case heating plates 122 and 123 pre-heat the guiding rollers 120 and 121 by a predetermined temperature.

That is, because the material and the film are heated by the heating plates 130 and 131 by an appropriate temperature after the guiding rollers 120 and 121 are pre-heated by the roller case heating plates 122 and 123 by a relative low temperature so as to be attached the film to the material, the coated material is passed between the cooling plates 150 and 151 under a state that the air bubble is prevented.

As the foregoing descriptions the present invention has advantages that because the pre-heating stage by the roller case heating plates prior to the heating stage by the heating plates is provided, the air bubble is not occured when the coated material is pressed and cooled.

## Claims

1. A laminator comprising : a body formed at its rear side with a supplying inlet and formed at its front side with an outlet, guiding roller disposed at the neighborhood of the inlet for guiding a material and a film to the inside of the body, heating member disposed at the neighborhood of the guiding roller for heating the material and the film, pressing roller disposed at the neighborhood of the heating member for pressing the material to be attached with the film thereto, cooling plate disposed at the neighborhood of the pressing roller for cooling the material attached with the film, wherein the above components are disposed at the lower plate disposed at the lower portion of the body.

2. The laminator in accordance with the claim 1, wherein the lower plate is disposed from the rear to the front of the body by a predetermined degrees.

3. A laminator comprising : a body formed at its front side with a supplying inlet and formed at its rear side with an outlet, guiding rollers disposed at the neighborhood of the inlet for guiding a material and a film to the inside of the body, heating members disposed at the neighborhood of the guiding rollers for heating the material and the film, pressuring rollers disposed at the neighborhood of the heating members for pressing the material attached with the film thereto, cooling plates disposed at the neighborhood of the pressing rollers for cooling the material attached with the film, wherein the guiding rollers are at their outer peripheral surface disposed with roller case heating plates for pre-heating the material and the film by a predetermined temperature.

4. The laminator in accordance with the claim 3, wherein the roller case heating plates serve to pre-heat the material and the film when the material and the film are supplied from the inlet by the guiding rollers.
